# EUROPÄISCHE PATENTANMELDUNG

(11) **EP 2 375 385 A1**
(43) Veröffentlichungstag der Anmeldung: **12.10.2011**
(21) Anmeldenummer: 10185884.3
(22) Anmeldetag: 01.10.2010
(51) Int. Cl.: G07C 5/00, G01P 1/12, G01P 15/18

(54) **Verfahren und System zur Bewertung des Fahrverhaltens eines Kraftfahrzeugführers**

(30) Priorität: 06.04.2010 EP 10159136
(71) Anmelder: Prozess Control GmbH, 21224 Rosengarten (DE)
(72) Erfinder: Henschel, Jürgen, 21224 Rosengarten (DE)
(74) Vertreter: Raffay & Fleck

(57) **Zusammenfassung**

Mit der Erfindung wird ein Verfahren zur automatisierten Bewertung des Fahrverhaltens eines Kraftfahrzeugführers geschaffen. Bei diesem Verfahren werden während der Fahrt auf dem Fahrzeug lastende Beschleunigungen und Verzögerungen zeitaufgelöst und aufgelöst nach den Richtungen: a) Fahrtrichtung, b) quer zur Fahrtrichtung in einer zu einem Fahrweg, auf dem sich das Fahrzeug bewegt, parallelen Ebene und c) quer zur Fahrtrichtung und quer zu der Ebene des Fahrweges, sowie die Neigung des Fahrzeuges im Raum gemessen und die Beschleunigungen und Verzögerungen nach Korrektur um die miterfasste Erdbeschleunigung in einer Rechnereinrichtung mit fahrzeugabhängig vorgebbaren Grenzwerten verglichen. Ein Einhalten der Grenzwerte von der Rechnereinrichtung wird als ein defensives Fahren, ein Überschreiten der Grenzwerte wird als ein offensives Fahren bewertet.

## Beschreibung

Die vorliegende Erfindung betrifft ein Verfahren zur automatisierten Bewertung des Fahrverhaltens eines Kraftfahrzeugführers. Sie betrifft ferner ein System zur Bewertung des Fahrverhaltens eines Kraftfahrzeugführers.

Es ist aus verschiedentlichen Aspekten heraus wünschenswert, das Fahrverhalten eines Kraftfahrzeugführers zu überprüfen. So ist es z.B. bekannt, die Führer von Lastkraftwagen in ihrem Fahrverhalten durch sogenannten Fahrtenschreiber zu überwachen. So wurde noch vor kurzem Fahrtenschreiber eingesetzt, die den Verlauf der Ausschläge des Fahrtgeschwindigkeitsanzeigers im zeitlichen Ablauf auf einer sogenannten Tachometerscheibe mitgeschrieben bzw. in einem graphisch aufgezeigten Kurvenverlauf dargestellt haben. Heute sind solche Fahrtenschreiber elektronisch ausgeführt.

Mit solchen Vorrichtungen ist es nicht nur dem Unternehmen, für den die jeweiligen Lastkraftwagenfahrer im Einsatz sind, sondern insbesondere auch Ordnungskräften möglich, die Einhaltung von gesetzlich vorgeschriebenen Ruhezeiten sowie die Einhaltung einer maximal erlaubten Geschwindigkeit zu überwachen.

Neben diesen vorbekannten, gesetzlich vorgeschriebenen Systemen und Vorrichtungen ist es z.B. für Betreiber großer Fuhrparks, wie z.B. Fuhrparks für den Au-βendienst bzw. Service von Unternehmen, Fuhrparks für Zustelldienstleister von Post oder anderen privaten Zustellunternehmen, Fuhrparks in Speditionen (auch Lastkraftwagen) und dgl. von hohem Interesse, die jeweiligen Nutzer bzw. Kraftfahrzeugführer der Fahrzeuge in weiteren Gesichtspunkten zu überwachen bzw. deren Fahrverhalten zu bewerten und, soweit als möglich, einen positiven Einfluss auf dieses Verhalten zu nehmen. So wird es für die Betreiber von Fuhrparks aufgrund steigender Energiepreise zunehmend wichtiger, die Führer der Kraftfahrzeuge zu einem Energie bzw. Kraftstoff sparenden Fahrverhalten anzuleiten, da ein nicht unerheblicher Teil der Fuhrparkkosten durch den Kraftstoffverbrauch verursacht wird. Auch ist aus Sicht der Betreiber eines Fuhrparks ein schonender Umgang mit den Kraftfahrzeugen zum möglichst verschleißarmen Betrieb derselben (Verlängerung der Lebensdauer von Verschleißteilen wie Kupplung und Bremse) nachhaltig erwünscht. Insgesamt sind durchschnittlich etwa 42% der Kosten für die Haltung und den Betrieb eines Kraftfahrzeuges Fahrer abhängig. Zu nennen sind beispielsweise Verschleiß, Versicherung und Kraftstoffverbrauch. Im Durchschnitt kommen auf 1 Liter Kraftstoff 2 Euro weitere Kosten für Wartung, Verschleiß etc. Somit zahlt sich eine Kraftstoffersparnis gleich dreifach aus. Mit gezieltem Fahrertraining lassen sich bei Personenkraftfahrzeugen bis zu 15% des Spritverbrauchs einsparen. Bei Lastkraftwagen sind Einsparungen von 15% erzielbar. Bei einem monatlichen Verbrauch von 35.000 Litern Kraftstoff pro Lastkraftwagen lassen sich im Monat somit 5250 Liter und zusätzlich zu der enormen Kraftstoffeinsparung weitere Betriebskosten in Höhe von 10.500 Euro einsparen.

Aber auch aus anderen Gesichtspunkten ist die Möglichkeit des Nachhaltens und objektiven Bewertens des Fahrverhaltens eines Kraftfahrzeugführers von Interesse. So besteht z.B. aus Sicht von Kfz-Versicherern ein Interesse daran, gefächerte und individualisierte Versicherungstarife anzubieten. Ein Risikofaktor hinsichtlich der Unfall- und damit Schadenshäufigkeit besteht in der Art und Weise des Fahrverhaltens eines Versicherungsnehmers. Offensive Fahrer, dies ist statistisch belegt, verursachen häufiger Unfälle und damit von der Versicherung zu regulierende Schadensfälle als defensiv ausgerichtete Kraftfahrzeugführer. Bisher gab es für die Versicherer keine Möglichkeit, die Fahrweise bzw. das Fahrverhalten eines Kraftfahrzeugführers objektiv nach dem Gesichtspunkt einer "Offensivität" bzw. "Defensivität" zu beurteilen und dies zu belegen. Entsprechend können die Versicherungen keine hinsichtlich des Fahrverhaltens abgestimmten und zugeschnittenen Versicherungstarife anbieten. Hier besteht mit anderen Worten ein Bedarf, eine entsprechende Kontrollmöglichkeit zu schaffen, um so Versicherungsnehmern eine freiwillige Teilnahme an einem entsprechenden Programm zur Beurteilung des Fahrverhaltens zu gewähren und darauf basierend eingestufte Versicherungstarife zu offerieren.

In diesem Zusammenhang ist es aus der WO 2009/068983 A2 bekannt, Beschleunigungssensoren in ein Kraftfahrzeug einzubauen und die Beschleunigungen und Verzögerungen, die auf das Fahrzeug wirken zu erfassen und den Fahrstil zu verbessern. Dazu wird der Beschleunigungssensor mit einer Recheneinheit und einem Speicher und gegebenenfalls einem Display und/oder Audiogerät gekoppelt. Nach Einbau des Beschleunigungssensors wird die Orientierung des Sensors relativ zum Kraftfahrzeug festgestellt und der Recheneinheit mitgeteilt.

Die Erfinder haben nun festgestellt, dass dieses Verfahren den Nachteil aufweist, dass zum einen das Erfassen der Orientierung des Sensors relativ zum Kraftfahrzeug aufwendig ist und darüber hinaus bei geneigten Straßen und/oder Steigungen erhebliche Probleme bei der Analyse der Daten und der Beurteilung des Fahrstils auftreten, eine Beurteilung sogar teilweise unmöglich ist oder falsche Ergebnisse liefert.

Aufgrund obiger Überlegungen stellt sich den Erfindern die Aufgabe, ein Verfahren zur automatisierten Bewertung des Fahrverhaltens eines Kraftfahrzeugführers anzugeben sowie ein System zur Bewertung des Fahrverhaltens eines Kraftfahrzeugführers zu schaffen, dass auch bei der Fahrt geneigter Fahrbahnen und/oder Steigungen zuverlässig arbeitet.

Die Erfinder haben herausgefunden, dass die oben geschilderten Probleme in der bei der Erfassung der Beschleunigungen und Verzögerungen miterfassten Erdbeschleunigung begründet liegen. Diese lässt sich bei Kenntnis der Neigung des Fahrzeuges oder bei weitgehend konstanter Neigung des Fahrzeuges im Raum herausrechnen. Werden jedoch Steigungen und/oder Schrägen befahren ist dies nicht mehr möglich. Zu diesem Zweck haben die Erfinder den Beschleunigungs-und Verzögerungssensor mit einem Neigungssensor kombiniert. So lässt sich die Richtung der Erdbeschleunigung relativ zum Fahrzeug bestimmen und die Erdbeschleunigung rechnerisch eliminieren. Als Neigungssensoren kommen beispielsweise Gyroskope oder Laserkreisel in Frage. Dadurch lässt sich, wie die Erfinder festgestellt haben, auch elegant das Problem der Erkennung der Orientierung der Sensoren relativ zum Kraftfahrzeug lösen. Die Erfassung der Einbaulage kann, insbesondere wenn die Beschleunigungssensoren und die Neigungssensoren in einer bekannten räumlichen Anordnung zueinander stehen, durch kurzes Abstellen des Fahrzeuges nacheinander auf zwei Flächen mit unterschiedlicher und bekannter Neigung erfolgen, wobei mindestens eine Fläche längst und mindestens eine quer zur Fahrrichtung geneigt sein muss.

Konkret wird die Aufgabe wird hinsichtlich des Verfahrens gelöst durch ein solches mit den Merkmalen des Patentanspruchs 1 . Vorteilhafte Weiterbildungen dieses Verfahrens sind in den abhängigen Ansprüchen 2 bis 7 angegeben. Ein erfindungsgemäßes System ist in dem nebengeordneten Patentanspruch 8 gekennzeichnet, diesbezügliche vorteilhafte Weiterbildungen lassen sich den abhängigen Ansprüchen 9 bis 15 entnehmen.

Die grundlegende Idee der Erfindung besteht darin, ein Fahrzeug, dessen Kraftfahrzeugführer hinsichtlich seines Fahrverhaltens bewertet werden soll, mit einer Sensorik auszurüsten, welche zeitaufgelöst und richtungsaufgelöst Beschleunigungen und Verzögerungen losgelöst von der immer wirkenden Erdbeschleunigung erfassen und einer Rechnereinrichtung zur Auswertung zuführen kann. Die Beschleunigungs- und Verzögerungskräfte werden dabei hinsichtlich der Richtung aufgelöst in drei unterschiedliche (linear unabhängige) Richtungen, nämlich erstens in Fahrtrichtung des Fahrzeuges, zweitens in einer Richtung quer zur Fahrtrichtung und innerhalb einer zu einem Fahrweg, auf dem sich das Fahrzeug bewegt, parallelen Ebene und drittens in einer Richtung quer zur Fahrtrichtung und quer zur Ebene des Fahrtweges. Darüber hinaus wird auch die Neigung des Fahrzeuges im Raum erfasst. Dabei werden zwei linear unabhängige Neigungswinkel, insbesondere der Winkel in Fahrtrichtung zwischen Fahrzeug und Waagerechter und der Winkel quer zur Fahrtrichtung zwischen Fahrzeug und Waagerechter erfasst. Auf Basis dessen kann die Richtung der Erdbeschleunigung relativ zum Fahrzeug bestimmt werden und die Erdbeschleunigung von den gemessenen Beschleunigungs- und Verzögerungswerten abgezogen werden. Dadurch lässt sich die auf das Fahrzeug wirkende Erdbeschleunigung aus den Messwerten eliminieren. Bei einem solchen Herausrechnen der Erdbeschleunigung kann in der Regel von einer konstanten Erdbeschleunigung ausgegangen werden. Wenn eine größere Genauigkeit gewünscht ist kann jedoch auch basierend auf der Position des Fahrzeuges, die beispielsweise über GPS ermittelt werden kann und einer entsprechenden Datenbank oder einem entsprechenden Berechnungsverfahren die an dem aktuellen Ort wirkende Erdbeschleunigung verwendet werden. Weiterhin werden diese korrigierten Messwerte der Beschleunigung und Verzögerung sodann in der Rechnereinrichtung mit fahrzeugabhängig vorgebbaren Grenzwerten verglichen, und es wird bei Einhalten der Grenzwerte ein defensives Fahren, bei Überschreiten der Grenzwerte ein offensives Fahren als Wertung festgestellt.

Dieser Vorgehensweise liegt die Erkenntnis zugrunde, dass sich offensives Fahrverhalten in entsprechenden Beschleunigungskräften bzw. Verzögerungskräften in Fahrtrichtung, in Querrichtung dazu innerhalb einer zum Fahrweg parallelen Ebene und quer zur Fahrtrichtung und quer zu dieser Ebene (insbesondere senkrecht dazu) äußert. So wird z.B. im Stadtverkehr ein offensiver Fahrer häufig innerhalb kurzer zeitlicher Abstände sein Fahrzeug stark beschleunigen und anschließend stark verzögern, z.B. beim Anfahren an einer auf grün umschaltenden Ampel und starkem Beschleunigen und anschließendem starken Abbremsen vor einer nachfolgenden, noch auf rot geschalteten oder auf das Haltesignal umspringenden weiteren Ampel. Ein defensiver Fahrer wird hier hingegen an der ersten Ampel beim Umspringen auf grün sanft anfahren, entsprechend nicht so starke Beschleunigungswerte erreichen und entweder die nächste Ampel bereits beim Umspringen auf das Fahrsignal "grün" erreichen und somit nicht abbremsen müssen oder aber, wenn er doch sein Fahrzeug bremsen muss, entsprechend sanft verzögern.

Ähnliche Überlegungen gelten hinsichtlich Querbeschleunigungen parallel zur Fahrbahnebene, wo bei rasanten Kurvendurchfahrten, wie sie für offensives Fahrverhalten kennzeichnend sind, stärkere Beschleunigungswerte auftreten werden als bei Kurvendurchfahrten mit gemäßigter Geschwindigkeit. Schließlich sind auch Beschleunigungen und Verzögerungen in einer quer zur Fahrtrichtung und quer zur Fahrbahnebene (insbesondere senkrecht dazu) verlaufenden Richtung kennzeichnend für das Fahrverhalten. So werden insbesondere offensive Fahrzeugführer wesentlich häufiger mit vergleichsweise hoher Geschwindigkeit über in verkehrsberuhigten Zonen typischerweise ausgebrachte Schwellen auf der Fahrbahn hinweg fahren und damit höhere Beschleunigungswerte in der zuletzt genannten Richtung erzielen als defensiv ausgerichtete Fahrzeugführer. Auch bei starken Bremsungen, wie sie für eine offensive Fahrweise kennzeichnend sind, erfolgt eine deutlich höhere Beschleunigung bzw. Verzögerung in dieser Raumrichtung durch das "Abtauchen" des Fahrzeuges beim Bremsen.

So wird also aus den ermittelten Beschleunigungswerten korreliert über die zeitliche Verteilung ein Muster gewonnen, welches durch Vergleich mit den fahrzeugabhängig vorgebbaren Grenzwerten eine Aussage darüber treffen lässt, ob es sich bei dem jeweiligen Fahrzeugführer um einen in seiner Fahrweise offensiv angelegten oder aber einen defensiv fahrenden Fahrzeugführer handelt.

Die Grenzwerte, mit denen die ermittelten Beschleunigungswerte zu vergleichen sind, sind selbstverständlich fahrzeugabhängig, sie korrelieren z.B. mit dem Fahrzeuggewicht und anderen technischen Daten.

Wenn, z.B. für ein Fahrertraining bzw. eine Fahrerkonditionierung in einem Fuhrpark der jeweilige Fahrzeugführer zu einer defensiveren Fahrweise angeleitet werden soll, so kann vorgesehen sein, dass dem Kraftfahrzeugführer ein Überschreiten wenigstens eines der Grenzwerte durch ein akustisches und/oder optisches Signal angezeigt wird. Entsprechend kann das System über ein optisches und/oder akustisches Signal verfügen. Wenn also z.B. aufgrund eines starken Beschleunigungs- und anschließenden Bremsmanövers im Stadtverkehr, welches auf ein offensives Fahrverhalten schließen lässt, der Fahrer eines Fahrzeuges bestimmte Grenzwerte überschreitet, so wird ihm dies gemäß dieser Weiterbildung durch ein Signal angezeigt. Der Fahrer erfährt so, dass sein zuletzt gezeigtes Fahrverhalten "offensiv" war und sich als verbesserungswürdig darstellt. Auf diese Weise wird der Fahrer dazu angehalten, sein Fahrverhalten anzupassen. Er wird dies schon allein deshalb zu unternehmen suchen, da er durch die wiederkehrenden, ihm angezeigten Signale immer wieder auf sein nicht optimales Fahrverhalten hingewiesen wird. Durch eine solchermaßen zu erzielende Konditionierung der einzelnen Kraftfahrzeugführer kann z.B. ein Betreiber eines Fuhrparks erreichen, dass der Gesamtverbrauch an Kraftstoff seines Fuhrparks verringert wird. Zudem wird durch die insgesamt defensivere Fahrweise der Kraftfahrzeugführer, die so zu erzielen ist, der Verschleiß der Verbrauchsteile bzw. -komponenten in den Fahrzeugen verringert, was einen weiteren Beitrag zur Kostensenkung darstellt. Schließlich verhindert ein insgesamt defensiveres Fahrverhalten sämtlicher Fahrzeugführer eines Fuhrparks das Unfallrisiko mit den damit verbundenen Haftungsregulierungen, Reparaturkosten und ggf. Ausfällen von Fahrern aufgrund bei Unfällen erlittener Verletzungen.

Neben festen fahrzeugspezifischen Grenzwerten können auch Grenzwerte für einzelne Fahrer und/oder deren Trainingslevel spezifisch eingestellt und/oder abgewandelt werden.

Um sehr offensiv fahrende Fahrzeugführer nicht von vornherein durch ein zu häufiges Auftreten der akustischen bzw. optischen Signale aufgrund vermehrter Überschreitung der Grenzwerte zu demotivieren, können mit Vorteil diese Grenzwerte dynamisch gestaltet werden. Hierzu kann z.B. vorgesehen sein, dass in mehreren Stufen, z.B. in dreien, die Grenzwerte, bei deren Überschreitung ein Signal ausgegeben, also ein offensives Fahren bewertet wird, zunächst vergleichsweise hoch eingestellt und entsprechend gespeichert werden, später, wenn diese Grenzwerte nur noch selten überschritten werden, nach unten korrigiert werden. Der Anpassung der Grenzwerte kann dabei entweder manuell durch Eingabe der geringeren Grenzwerte über eine Schnittstelle erfolgen, sie kann auch automatisiert aus dem System heraus selbst generiert werden.

In einer weiteren Weiterbildung der Erfindung ist vorgesehen, dass die zeitaufgelöst gemessenen Beschleunigungs- und Verzögerungskräfte in einem Langzeitverlauf gespeichert werden. Diese Speicherung kann z.B. in dem Speicher des Systems erfolgen, in dem auch die Grenzwerte abgelegt sind. Eine solche Speicherung des Langzeitverlaufes ermöglicht es z.B. einem Betreiber eines Fuhrparks, Auswertungen einzelner Fahrzeuge bzw. Fahrer vorzunehmen. Dies ist insbesondere dann möglich, wenn bei wechselnden Fahrzeugführen von dem System auch der jeweils gefahrene Fahrzeugführer mit erfasst und in dem Speicher verzeichnet und den aufgezeichneten Daten zugeordnet wird. Eine Speicherung des Langzeitverlaufes dieser Daten ist auch von Interesse, wenn diese als Nachweis und Beleg eines defensiven Fahrverhaltens gegenüber einem Versicherer hergenommen werden sollen. Wenn, wie eingangs bereits erläutert, eine Versicherung erwägt, eine Versicherungsprämie für einen bestimmten Versicherungsschutz von dem Fahrverhalten eines Kraftfahrzeugführers abhängig zu machen, so wird die Versicherung zum Nachweis der tatsächlich korrekten Einstufung eines Fahrverhaltens als defensiv hierüber Daten verlangen. Als solche Daten können dann beispielsweise die im Langzeitverlauf gespeicherten zeitaufgelöst ausgewerteten Signale der Beschleunigungssensoren Verwendung finden.

Eine Auswertung der gemessenen Beschleunigungs- und Verzögerungskräfte kann gemäß einer vorteilhaften Weiterbildung der Erfindung auch zentral außerhalb des Fahrzeuges erfolgen, hierzu kann in dem System eine entsprechende zentrale rechnergesteuerte Auswerteeinheit vorgesehen sein. Eine solche Auswertung kann, wie bereits erwähnt, z.B. von einem Fuhrparkmanager durchgeführt werden, oder aber im Rahmen einer Datenauswertung bei einer Versicherung.

Damit nur berechtigte Personen die Grenzwerte in dem Speicher des Systems anpassen und dort gespeicherte Auswertungen auslesen können, sollte der Zugriff mit Vorteil passwortgeschützt oder in anderer Weise auf einen solchen Kreis von Zugriffsberechtigten beschränkt sein.

Vorteilhafterweise befinden sich die Grenzwerte und/oder fahrerspezifische Werte über die die Grenzwerte verändert werden auf einer auswechselbaren Speicherkarte. So kann jeder Fahrer über eine Speicherkarte verfügen, die er beim Benutzen eines Fahrzeuges mit der darin befindlichen Recheneinheit koppelt. Dies kann durch Einlagen in ein Kartenlesegerät oder über Funk geschehen. Vorteilhafterweise werden auf der Karte auch die Beschleunigungs- und Verzögerungsmesswerte gespeichert.

Vorteilhafterweise werden weitere im Fahrzeug erhobene Daten in den Vergleich mit den Grenzwerten einbezogen und/oder die Grenzwerte und/oder die Beschleunigungs- und Verzögerungswerte auf Basis dieser verändert. Je nach erhobenen Daten kann sich eine unterschiedliche Behandlung anbieten.

Werden beispielsweise bei Sonderrechtsfahrten die Aktivierung der Alarmeinrichtungen erfasst, bietet es sich an, Warnungen vollständig zu unterdrücken und die Grenzwerte zumindest deutlich anzuheben, wenn nicht sogar vollständig frei zu schalten.

Beispielsweise bei Müllabfuhren bietet es sich an, die Aktivierung von Überkopfschüttlern oder sonstigen Schüttlern zu erfassen und die Grenzwerte entsprechend zu erhöhen oder die Messwerte stärker zu glätten.

Generell bietet sich die Erfassung der Aktivierung von Fremdaggregaten an. Auch kann es sinnvoll sein Umwelteinflüsse oder Beladezustände zu erfassen. Beispielsweise bei einem Betonmischer macht es Sinn, unterschiedliche Grenzwerte für den beladenen und den entladenen Zustand anzunehmen.

Die zusätzlich erfassten Werte oder deren Veränderungen können, gegebenenfalls verdichtet, gespeichert werden.

Mit dem Beschriebenen Verfahren beziehungsweise System lassen sich jedoch auch weitere Vorteile und Anwendungen erschließen. In Kombination mit beispielsweise einer Kommunikationseinrichtung, wie beispielsweise einem GSM-Modem oder einer Kopplung an ein Handy, lassen sich bei einen Unfall indizierenden Messwerten beispielsweise Rettungskräfte automatisch alarmieren. Ihnen können auch die kurz zuvor gemessenen Beschleunigungs- und Verzögerungs-und Neigungswerte und/oder daraus ermittelte Einschätzungen zur Unfallsituation und/oder die aktuelle Position übermittelt werden. Darüber hinaus ließe sich auch eine Entlastung der Polizei erreichen, in dem diese nur ausrückt, wenn der Unfall auf Basis der gemessenen Beschleunigungen, Verzögerungen und Neigungen eine gewisse schwere überschritten hat.

Darüber hinaus lassen sich auf Basis der Messwerte unmittelbar Abschätzungen über die Art und die Schwere möglicher Beschädigungen ermitteln die durch Versicherungen und/oder Werkstätten zur schnelleren und zuverlässigeren Abwicklung genutzt werden können.

Auch lassen sich Lenk- und Ruhezeiten auf einfache Weise mitüberwachen und dokumentieren.

Weitere Vorteile und Merkmale der Erfindung ergeben sich aus der nachstehenden Beschreibung eines Ausführungsbeispiels anhand der beigefügten Figuren. Dabei zeigen:
- Fig. 1: schematisch die Darstellung eines Kraftfahrzeuges mit darin integriertem erfindungsgemäßen System zur Bewertung des Fahrverhaltens eines Kraftfahrzeugführers mit erläuternden Darstellungen der Wirkweise und des Ablaufes;
- Fig. 2: die Auswertung des Sensors nach Beschleunigungs- und Verzögerungswerten für einen Fahrer eines mit dem erfindungsgemäßen System ausgerüsteten Kraftfahrzeuges im zeitlichen Verlauf;
- Fig. 3: den Vergleich des Verlaufes der Signalwerte für Beschleunigung und Verzögerung bei unterschiedlichen Führern eines mit dem erfindungsgemäßen System ausgerüsteten Kraftfahrzeuges;
- Fig. 4: eine Darstellung der Relation zwischen Beschleunigungs- und Verzögerungswerten, wie sie mit dem erfindungsgemäßen System für ein damit ausgestattetes Kraftfahrzeug ermittelt worden sind; und
- Fig. 5: den Zusammenhang zwischen dem Auftreten von ein offensives Fahrverhalten anzeigenden Signalen und Kraftstoffverbrauch.

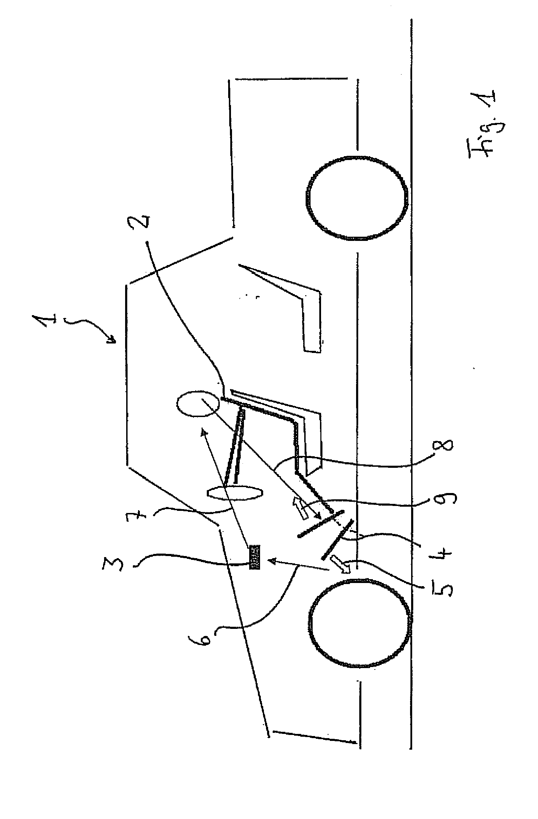

In Fig. 1 ist schematisch ein Kraftfahrzeug 1 mit einem darin sitzenden Kraftfahrzeugführer 2 dargestellt, wobei in dem Kraftfahrzeug ein System zur Bewertung des Fahrverhaltens des Kraftfahrzeugführers integriert ist. Das System enthält eine mit dem Bezugszeichen 3 bezeichnete Sensor- und Steuereinheit mit Anzeige, in welcher eine Sensoranordnung zum zeitlich aufgelösten Erfassen von Beschleunigungen und Verzögerungen richtungsaufgelöst in Richtungen in Fahrrichtung, quer zur Fahrtrichtung in einer Ebene parallel zu dem Fahrweg und quer zur Fahrtrichtung und quer zu der Ebene des Fahrweges und der Neigung, eine mit der Sensoranordnung verbundene Rechnereinrichtung sowie eine mit der Rechnereinrichtung verbundene Anzeige in Form einer akustischen und/oder optischen Anzeige für den Kraftfahrzeugführer 2. Ferner umfasst die Einheit 3 eine Schnittstelle, mit der diese drahtlos mit einer externen Schnittstelle zum digitalen Datenaustausch verbunden werden kann sowie einen Speicher, der mit die Rechnereinheit in Verbindung steht.

Während der Fahrt erfasst die Einheit 3 mit der Sensoranordnung Beschleunigungen und Verzögerungen in Fahrtrichtung, in Querrichtung dazu parallel zu der Fahrbahnebene sowie Beschleunigungs- und Verzögerungswerte quer zur Fahrbahnebene und quer zur Fahrtrichtung sowie die Neigung des Fahrzeuges im Raum. Diese werden nach rechnerischem Abzug der Erdbeschleunigung in der Rechnereinheit ausgewertet und mit in dem Speicher abgelegten Grenzwerten verglichen. Übersteigen die erfassten Werte die Grenzwerte, so wird mit der Anzeige dem Kraftfahrzeugführer 2 ein entsprechendes Signal ausgegeben.

Tritt beispielsweise der Fahrzeugführer 2 das Gaspedal 4 stark durch, wie dies durch den Pfeil 5 angedeutet ist, so wird in der Sensor- und Steuereinheit 3 ein hoher Beschleunigungswert festgestellt, was durch den Pfeil 6 angedeutet ist. Diese Feststellung führt zu einer optischen und/oder akustischen Anzeige gegenüber dem Kraftfahrzeugführer 2, was durch den Pfeil 7 angedeutet ist. Der Kraftfahrzeugführer 2 realisiert so, dass er ein die Grenzen überschreitendes offensives Fahrverhalten an den Tag gelegt hat, und wird das Gaspedal 4 lösen, was in der Reaktion des Kraftfahrzeugführers 2 durch den Pfeil 8 und für das Lösen des Gaspedals 4 durch den Pfeil 9 dargestellt ist.

Auf diese Weise wird also zunächst das Fahrverhalten des Kraftfahrzeugführers bewertet, und es wird bei festgestelltem "Feh!verha!ten" ein Signal als Rückkopplung an den Kraftfahrzeugführer 2 ausgegeben, der daraufhin sein Verhalten anpasst.

Zur Verbesserung der Motivation des Kraftfahrzeugführers 2 können in dem System die Grenzwerte in dem Speicher zunächst mit vergleichsweise hoher Toleranz (also vergleichsweise hohe Beschleunigungen bzw. Verzögerungen zulassende Grenzwerte) abgelegt werden. Wenn eine Verbesserung des Fahrverhaltens festzustellen und die Anzahl der ausgegebenen Signale reduziert ist, kann dann schrittweise eine Senkung und Verschärfung der Grenzwerte erfolgen, um den Kraftfahrzeugführer 2 weiterhin zu einer defensiveren Fahrweise anzuhalten.

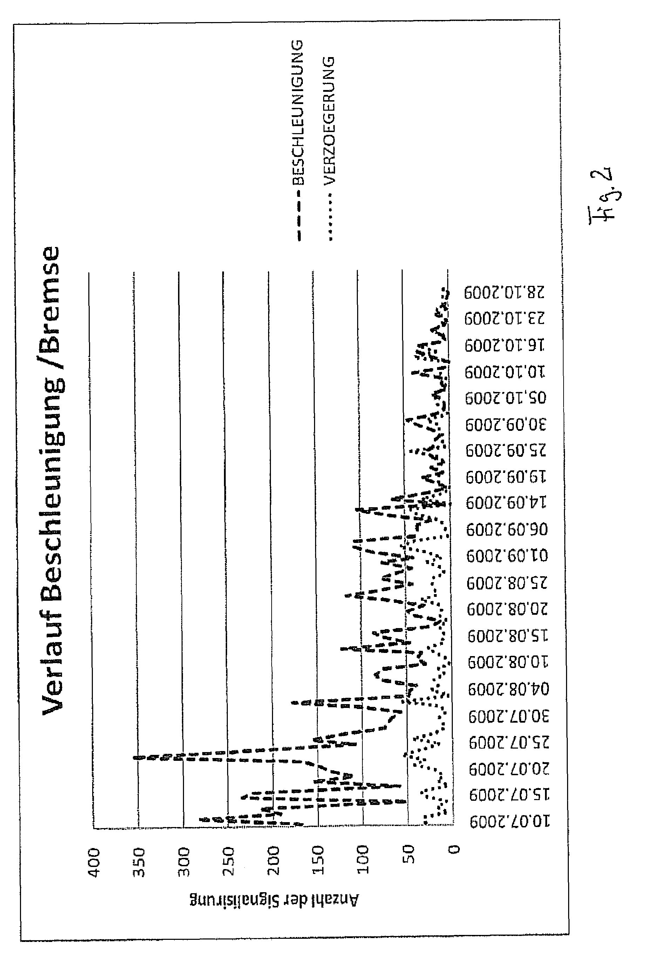

Die Wirksamkeit dieses Verfahrens haben die Erfinder in verschiedenen Testläufen untersucht und belegen können. So zeigt z.B. die Fig. 2 über einen zeitlichen Verlauf die Häufigkeit des Auftretens von einen vorgegebenen Grenzwert übersteigenden Beschleunigungs- und Verzögerungssignalen für ein mit dem erfindungsgemäßen System ausgerüstetes Kraftfahrzeug, welches durch ein und denselben Kraftfahrzeugführer und Vielfahrer in einem Zeitraum über 3½ Monate gefahren worden ist. Während im Zuge der Anfangsphase innerhalb der ersten zwei Wochen häufig Tage mit einer sehr hohen Anzahl von grenzüberschreitenden Werten (bis zu über 350) festzustellen waren, so sind diese deutlich abgesunken und bewegen sich bereits nach etwa zwei Monaten regelmäßig unterhalb der Anzahl 50. Es konnte also die Anzahl der Grenzwertüberschreitungen gegenüber einem anfänglichen Durchschnittswert von etwa 250 pro Tag auf unter 1/5 dieses Werks abgesenkt werden.

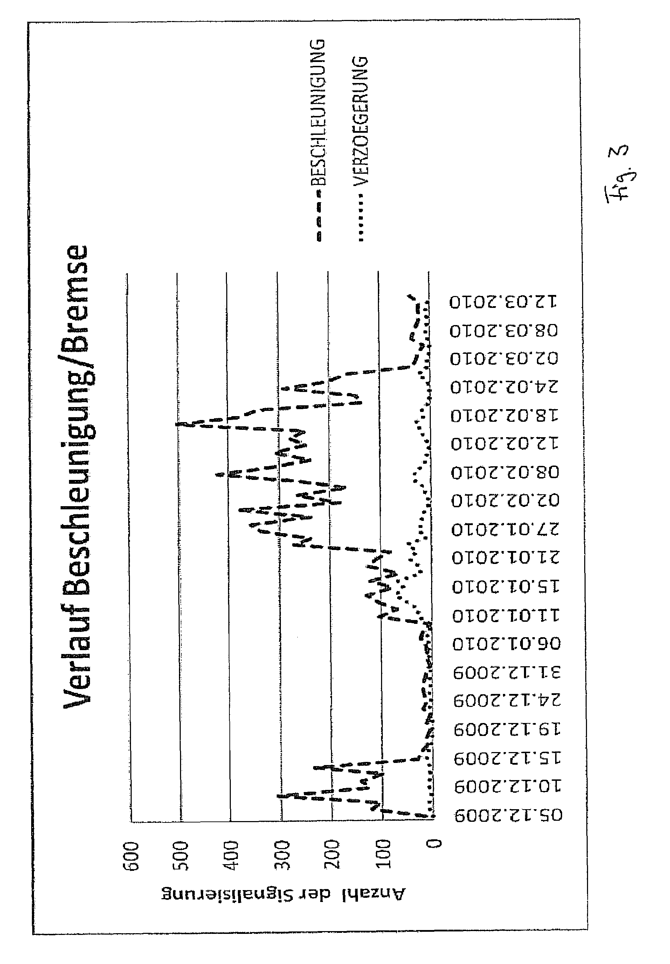

In Fig. 3 ist eine weitere Darstellung gezeigt, die einen Vergleich zwischen einzelnen Fahrern ermöglicht. Während zunächst ein erster Fahrer in der Zeit zwischen dem 5.12. und dem 15.12. eingewiesen worden war und mit dem System gelernt hat, verhielt sich dieser Fahrer in dem Zeitraum zwischen dem 15.12. und dem 11.01. äußerst defensiv. Hieran anschließend wurde das Fahrzeug einem anderen Fahrer übergeben, der es in dem Zeitraum 11.01. bis 02.03. bewegt hat. Deutlich zu erkennen ist, dass in diesem Zeitraum sehr viel höhere Beschleunigungs- und Verzögerungswerte auftreten, was für eine deutlich offensivere Fahrweise dieses Fahrers spricht. Mit dem Rückwechsel auf den ersten Fahrer am 02.03. ergibt sich dann wieder das zuvor bereits gezeigte Bild von niedrigen Ausschlägen als Anzeichen für eine passive Fahrweise. Diese Darstellung belegt, dass mit dem Verfahren und dem erfindungsgemäßen System Fahrer individuell in ihrer Fahrweise bewertet werden können, was z.B. für Kfz-Versicherungen einen Rückschluss auf das Fahrverhalten und damit eine Einstufung in bestimmte Risikogruppen und Prämienklassen ermöglicht, sofern die Kraftfahrzeughalter einer entsprechenden Einstufung zustimmen. Dann müssten lediglich entweder die Fahrer oder aber es müssten Mitarbeiter oder Beauftragte der Versicherung die Daten aus dem System auslesen, z.B. mit Hilfe der drahtlosen Schnittstelle, um sie auszuwerten und die korrekte Einstufung des Versicherungsnehmers hinsichtlich seiner Fahrweise bzw. hinsichtlich der Fahrweise der das Kraftfahrzeug bewegenden Personen zu überprüfen.

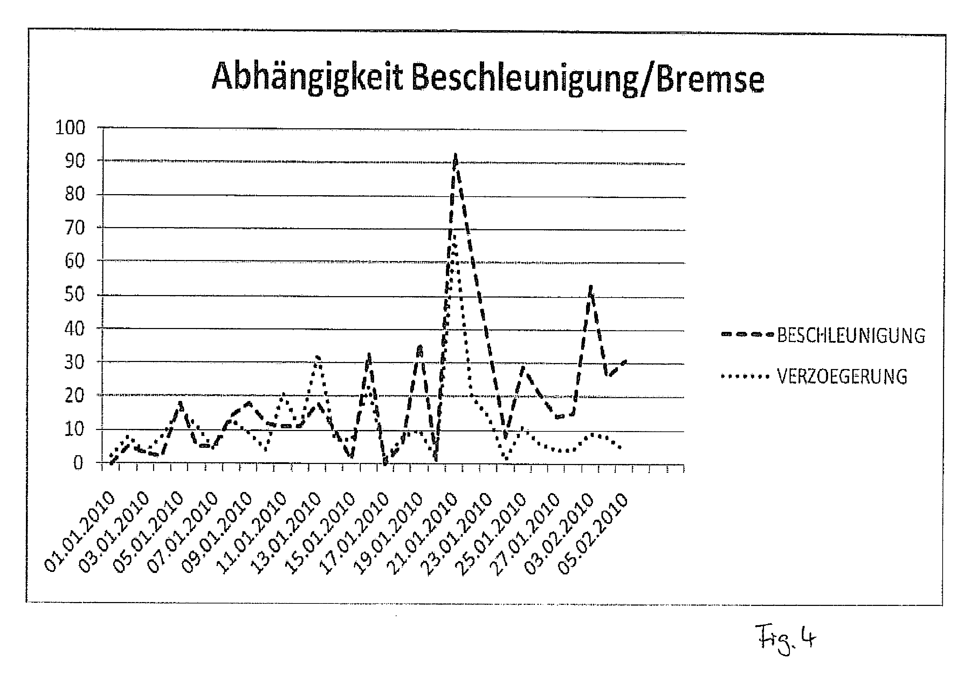

In Fig. 4 ist eine weitere Darstellung gegeben, die zeigt, dass zwischen Beschleunigungs- und Verzögerungswerten eine Korrelation dahingehend besteht, dass hohe Beschleunigungswerte in der Regel auch hohe Verzögerungswerte bedingen. Daraus lässt sich sehr einfach ablesen, dass hohe Beschleunigungen mit korrelierend hohen Verzögerungen ein deutliches Signal für eine offensive Fahrweise mit insbesondere den negativen Erscheinungen eines erhöhten Kraftstoffverbrauches bezeichnen.

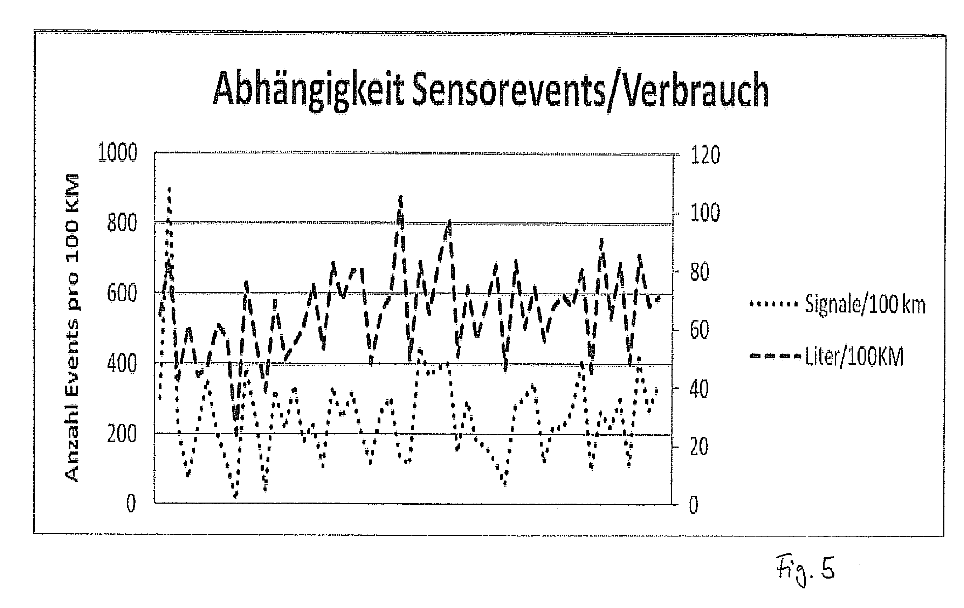

Der Zusammenhang zwischen der Anzahl der auftretenden Signale, d.h. der Grenzwertüberschreitungen, die mit dem erfindungsgemäßen System erfasst sind, und dem Kraftstoffverbrauch ergibt sich aus Fig. 5. Hier ist deutlich zu sehen, dass eine höhere Anzahl von Signalen und damit ein offensiveres Fahrverhalten stets auch mit einem erhöhten Kraftstoffverbrauch korreliert. Mit anderen Worten wird ein Einflussnehmen auf den Kraftfahrzeugführer und Anleiten zu einer defensiveren Fahrweise, wie dies mit dem erfindungsgemäßen System in automatisierter Weise möglich ist, zwangsläufig zu einer deutlichen Reduzierung des Kraftstoffverbrauches beisteuern und damit eine Kostenersparnis für den Betrieb des Kraftfahrzeuges bedingen, was sich insbesondere in einem Pool von Kraftfahrzeugen, wie er z.B. in Unternehmen vorhanden ist, deutlich auswirkt. Es gehen aber auch weitere Einsparungen damit einher, insbesondere hinsichtlich des Materialverschleißes und der Wartungskosten.

### Bezugszeichenliste

- 1: Kraftfahrzeug
- 2: Kraftfahrzeugführer
- 3: Sensor- und Steuereinheit mit Anzeige
- 4: Gaspedal
- 5: Pfeil
- 6: Pfeil
- 7: Pfeil
- 8: Pfeil
- 9: Pfeil

## Patentansprüche

1. Verfahren zur automatisierten Bewertung des Fahrverhaltens eines Kraftfahrzeugführers (2), wobei während der Fahrt auf das Fahrzeug (1) wirkende Beschleunigungen und Verzögerungen zeitaufgelöst und aufgelöst nach den Richtungen: a) Fahrtrichtung, b) quer zur Fahrtrichtung in einer zu einem Fahrweg, auf dem sich das Fahrzeug bewegt, parallelen Ebene und c) quer zur Fahrtrichtung und quer zu der Ebene des Fahrweges, gemessen und in einer Rechnereinrichtung mit fahrzeugabhängig vorgebbaren Grenzwerten verglichen werden, wobei ein Einhalten der Grenzwerte von der Rechnereinrichtung als ein defensives Fahren, ein Überschreiten der Grenzwerte als ein offensives Fahren bewertet werden, **dadurch gekennzeichnet, dass** die Neigung des Kraftfahrzeuges (1) im Raum zeitaufgelöst erfasst wird und auf Basis der erfassten Neigung die erfassten Beschleunigungen und Verzögerungen vor dem Vergleichen mit den vorgegebenen Grenzwerten um die in den gemessenen Beschleunigungen und Verzögerungen miterfasste Erdbeschleunigung korrigiert werden.

2. Verfahren nach Anspruch 1, **dadurch gekennzeichnet, dass** dem Kraftfahrzeugführer (2) ein Überschreiten wenigstens eines der Grenzwerte durch ein akustisches und/oder optisches Signal angezeigt wird.

3. Verfahren nach einem der vorhergehenden Ansprüche, **dadurch gekennzeichnet, dass** die zeitaufgelöst gemessenen Beschleunigungen und Verzögerungen in einem Langzeitverlauf gespeichert werden.

4. Verfahren nach einem der vorhergehenden Ansprüche, **dadurch gekennzeichnet, dass** die gemessenen Beschleunigungen und Verzögerungen au-βerhalb des Fahrzeuges zentral ausgewertet werden.

5. Verfahren nach einem der vorhergehenden Ansprüche, **dadurch gekennzeichnet, dass** die Grenzwerte während eines Bewertungszeitraumes ausgehend von weiter gezogenen Grenzwerten schrittweise zu engeren Grenzwerten verändert vorgegeben werden.

6. Verfahren nach einem der vorhergehenden Ansprüche, **dadurch gekennzeichnet, dass** weitere im Fahrzeug erhobene Daten in den Vergleich mit den Grenzwerten einfließen und/oder die Grenzwerte und/oder die Beschleunigungen und Verzögerungen auf Basis der weiteren im Fahrzeug erhobenen Daten verändert werden.

7. Verfahren nach einem der vorhergehenden Ansprüche, **dadurch gekennzeichnet, dass** die Grenzwerte auf einer auswechselbaren Speicherkarte erfasst sind.

8. System zur Bewertung des Fahrverhaltens eines Kraftfahrzeugführers (2) mit einer in einem zu führenden Fahrzeug angeordneten Sensoreinheit, welche eine Sensoranordnung zur Erfassung von während der Fahrt auf dem Kraftfahrzeug (1 ) lastenden Beschleunigungen und Verzögerungen in drei unabhängigen Raumrichtungen u aufweist, nämlich a) in Fahrtrichtung, b) in einer Richtung quer zur Fahrtrichtung in einer zu einem Fahrweg, auf dem sich das Fahrzeug (1) bewegt, parallelen Ebene und c) in einer Richtung quer zur Fahrtrichtung und quer zu der Ebene des Fahrweges, und mit einer in dem Fahrzeug (1) angeordneten Rechnereinheit, die mit der Sensoranordnung zum Datenaustausch verbunden ist und einen Speicher sowie eine Schnittstelle aufweist, wobei in dem Speicher Grenzwerte für die Beschleunigungen und Verzögerungen abgelegt sind und die Schnittstelle eine Kommunikation mit der Rechnereinheit erlaubt, um die Grenzwerte in dem Speicher zu verändern, und wobei die Rechnereinheit zur zeitaufgelösten Auswertung von von der Sensoreinheit erhaltenen, die Beschleunigungen und Verzögerungen repräsentierenden Daten und Abgleich der Auswertung mit den Grenzwerten eingerichtet ist, **dadurch gekennzeichnet, dass** die Sensoranordnung zur Erfassung der Neigung des Fahrzeuges im Raum eingerichtet ist und die Recheneinheit die gemessenen Beschleunigungen und Verzögerungen vor dem Abgleich der Auswertung mit den Grenzwerten um die bei der Erfassung der Beschleunigungen und Verzögerungen miterfasste Erdbeschleunigung korrigiert.

9. System nach Anspruch 8, **dadurch gekennzeichnet, dass** die Rechnereinheit dazu eingerichtet ist, einen langfristigen Verlauf der zeitaufgelösten Auswertung in dem Speicher zu speichern.

10. System nach einem der Ansprüche 8 oder 9, **dadurch gekennzeichnet, dass** es in dem Kraftfahrzeug (1) in einem Kraftfahrzeugführerbereich akustische und/oder optische Signalmittel aufweist, die mit der Rechnereinheit verbunden sind, und dass die Rechnereinheit eingerichtet ist, bei Überschreiten wenigstens eines Grenzwertes über die Signalmittel ein Signal an den Kraftfahrzeugführer (2) zu geben.

11. System nach einem der Ansprüche 8 bis 10, **dadurch gekennzeichnet, dass** es zudem eine außerhalb des Fahrzeuges (1) zentral angeordnete, rechnergesteuerte Auswerteeinheit aufweist.

12. System nach einem der Ansprüche 8 bis 11, **dadurch gekennzeichnet, dass** der Zugriff passwortgeschützt oder in andere Weise auf einen Kreis von Zugriffsberechtigen beschränkt ist.

13. System nach einem der Ansprüche 8 bis 12, **dadurch gekennzeichnet, dass** der Speicher auswechselbar ist

14. System nach einem der Ansprüche 8 bis 13, **dadurch gekennzeichnet, dass** Schnittstellen für die Erfassung weitere im Fahrzeug erhobenen Daten und dadurch, dass die Recheneinheit eingerichtet ist, die erfassten weiteren im Fahrzeug erhobenen Daten in den Vergleich mit den Grenzwerten einfließen und/oder die Grenzwerte und/oder die Beschleunigungen- und Verzögerungen auf Basis der weiteren im Fahrzeug erhobenen Daten verändert werden

15. System nach einem der Ansprüche 8 bis 14, **dadurch gekennzeichnet, dass** die Sensoranordnung zur Erfassung der Neigung im Raum ein Gyroskop und/oder einen Laserkreisel aufweist.
